(19) Europäisches Patentamt
European Patent Office
Office européen des brevets

(11) **EP 4 321 375 A1**

(12) **EUROPEAN PATENT APPLICATION**

(43) Date of publication:
**14.02.2024 Bulletin 2024/07**

(21) Application number: **23187998.2**

(22) Date of filing: **27.07.2023**

(51) International Patent Classification (IPC):
**B60L 58/25** (2019.01)   **B60L 15/02** (2006.01)

(52) Cooperative Patent Classification (CPC):
**B60L 58/27;** B60L 2220/54; B60L 2240/545;
Y02T 10/70

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **12.08.2022  CN 202210971695**

(71) Applicant: **Huawei Digital Power Technologies
Co., Ltd.
Shenzhen, Guangdong 518043 (CN)**

(72) Inventors:
• **LIN, Mengxuan
  Shenzhen, 518043 (CN)**
• **CHEN, Jinhua
  Shenzhen, 518043 (CN)**
• **WU, Chaoqiang
  Shenzhen, 518043 (CN)**

(74) Representative: **Isarpatent
Patent- und Rechtsanwälte
Barth Hassa Peckmann & Partner mbB
Friedrichstraße 31
80801 München (DE)**

(54) **CONTROLLER FOR DRIVE MOTOR AND RELATED DEVICE THEREOF**

(57)    This application provides a controller for a drive motor and a related device thereof. The drive motor performs heat exchange with a power battery through a cooling loop. The drive motor includes a three-phase stator winding. The power battery supplies power to the three-phase stator winding through an inverter circuit. In response to that a temperature of the power battery is greater than or equal to a preset battery temperature, the controller controls an output current of the inverter circuit, so that the drive motor outputs torque to drive a wheel. In response to that a temperature of the power battery is less than a preset battery temperature, the controller adjusts an output current of the inverter circuit based on a result of comparison between a voltage of the power battery and a preset battery voltage, to control the output current of the inverter circuit to increase heat generated by the three-phase stator winding of the drive motor. According to this application, the power battery may be heated by using the heat generated by the drive motor, thereby reducing costs.

FIG. 11

**Description**

**TECHNICAL FIELD**

This application relates to the field of new energy vehicle technologies, and in particular, to a controller for a drive motor and a related device thereof.

**BACKGROUND**

In an electric vehicle, a power battery provides electric energy to a drive motor, and the drive motor converts the electric energy into mechanical energy to drive the electric vehicle. However, the power battery has an optimal operating temperature range. For example, an optimal operating temperature of a lithium battery is about 20°C. When a battery temperature of the power battery is excessively low, a battery capacity loss of the power battery is great, and a discharge rate and a charge rate both decrease. Therefore, when the electric vehicle is used in a low-temperature environment, the power battery needs to be heated.

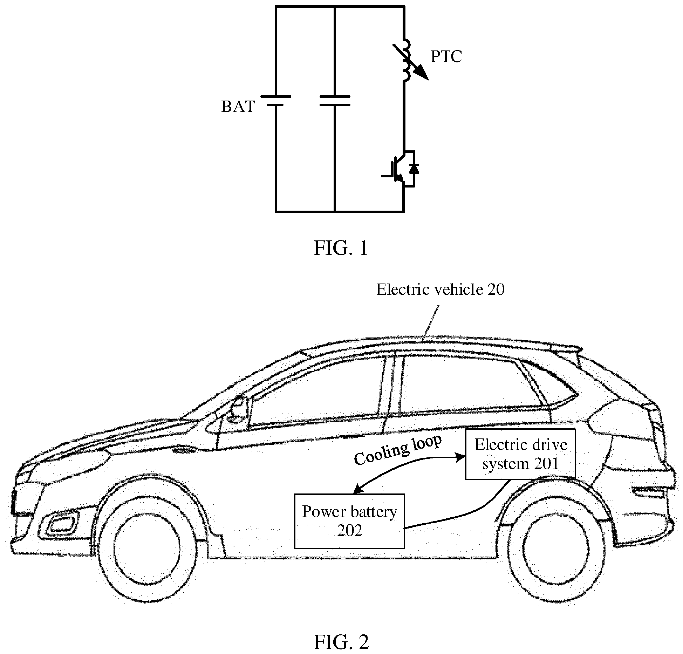

FIG. 1 shows a heating apparatus for the power battery according to the conventional technology. The heating apparatus includes a positive temperature coefficient (Positive Temperature Coefficient, PTC) thermistor and a switching transistor. When a battery management system (Battery Management System, BMS) in the electric vehicle determines that the temperature of the power battery BAT is low, the switching transistor is controlled to be turned on, and the PTC is connected to a circuit to generate joule heat. The joule heat may heat a coolant in a cooling loop, thereby heating the power battery BAT. A heating manner in the conventional technology requires an additional heating apparatus, incurring high costs.

**SUMMARY**

This application provides a controller for a drive motor and a related device thereof. A power battery may be heated by using heat generated by the drive motor, thereby reducing costs.

According to a first aspect, an embodiment of this application provides a controller for a drive motor. The drive motor includes a three-phase stator winding. The three-phase stator winding is connected to an output end of an inverter circuit, and may receive an output current of the inverter circuit. An input end of the inverter circuit is connected to a power battery. That is, the power battery supplies power to the three-phase stator winding through the inverter circuit. In addition, a control end of the inverter circuit is connected to the controller.

During specific implementation, in response to that a temperature of the power battery is greater than or equal to a preset battery temperature, the controller controls the output current of the inverter circuit, so that the drive motor outputs torque to drive a wheel. In response to that a temperature of the power battery is less than a preset battery temperature, the controller adjusts the output current of the inverter circuit based on a result of comparison between a voltage of the power battery and a preset battery voltage, to control the output current of the inverter circuit to increase heat generated by the three-phase stator winding of the drive motor.

The three-phase stator winding and a rotor winding may perform heat exchange with the power battery through a cooling loop, that is, the heat generated by the three-phase stator winding may be used to heat the power battery. Therefore, a heating rate of the power battery increases when the heat generated by the three-phase stator winding increases. It should be explained that an increase in the heating rate of the power battery may be understood as an increase in a temperature rise of the power battery in a unit time.

With reference to the first aspect, in a first possible implementation, in response to that the temperature of the power battery is less than the preset battery temperature, the controller outputs a first control signal to control the output current of the inverter circuit, so that the output torque of the drive motor is zero.

With reference to the first aspect or with reference to the first possible implementation of the first aspect, in a second possible implementation, in response to that the temperature of the power battery is less than the preset battery temperature, the controller controls the output current of the inverter circuit to satisfy a first preset condition. In this case, when the inverter circuit outputs a current that satisfies the first preset condition, a direct current component and an alternating current component of a quadrature-axis current of the three-phase stator winding are zero.

With reference to the first aspect or with reference to any possible implementation of the first aspect, in a third possible implementation, in response to that the voltage of the power battery is less than or equal to the preset battery voltage, the controller outputs the first control signal to control the output current of the inverter circuit. In response to that the voltage of the power battery is greater than the preset battery voltage, the controller outputs a third control signal to control the output current of the inverter circuit. In this embodiment of this application, when the voltage of the power battery is greater than the preset battery voltage, the controller may inject a harmonic into the output current of the inverter circuit, that is, inject the harmonic into a current of the three-phase stator winding, to further increase the heat generated by the three-phase stator winding, and improve heating efficiency of the power battery.

With reference to the first aspect or with reference to any possible implementation of the first aspect, in a fourth possible implementation, in response to that the voltage of the power battery is less than or equal to the preset battery voltage, the controller controls the output current of the inverter circuit to satisfy the first preset condition. In response to that the voltage of the power battery is greater than the preset battery voltage, the controller controls the output current of the inverter circuit to satisfy a third preset condition. In this case, when the inverter circuit outputs a current that satisfies the third preset condition, the alternating current component of the quadrature-axis current of the three-phase stator winding is not zero.

With reference to the first aspect, in a fifth possible implementation, the drive motor further includes the rotor winding. The rotor winding is connected to an output end of a direct current converter circuit, and may receive an output current of the direct current converter circuit. An input end of the direct current converter circuit is connected to the power battery. That is, the power battery supplies power to the rotor winding through the direct current converter circuit. In addition, a control end of the direct current converter circuit is connected to the controller.

During specific implementation, in response to that the temperature of the power battery is less than the preset battery temperature, the controller outputs a second control signal to control the output currents of the inverter circuit and the direct current converter circuit, so that the output torque of the drive motor is zero.

In this embodiment of this application, in addition to the three-phase stator winding being connected to the inverter circuit, the rotor winding is connected to the direct current converter circuit. That is, the drive motor in this case may be understood as a synchronous motor. According to this embodiment of this application, in addition to the heat generated by the three-phase stator winding, heat generated by the rotor winding may be used to heat the power battery without an additional heating apparatus, thereby reducing costs. In other words, in this embodiment of this application, heat generated by the drive motor may be further increased, thereby further increasing the heating rate of the power battery.

With reference to the first aspect, in a sixth possible implementation, the drive motor further includes the rotor winding. The rotor winding is connected to an output end of a direct current converter circuit, and may receive an output current of the direct current converter circuit. An input end of the direct current converter circuit is connected to the power battery. That is, the power battery supplies power to the rotor winding through the direct current converter circuit. In addition, a control end of the direct current converter circuit is connected to the controller.

During specific implementation, in response to that the temperature of the power battery is less than the preset battery temperature, the controller controls the output currents of the inverter circuit and the direct current converter circuit to satisfy a second preset condition. In this case, the torque of the drive motor is zero, and a direct-axis current of the three-phase stator winding is in a preset proportion to a current of the rotor winding.

With reference to the fifth possible implementation of the first aspect or with reference to the sixth possible implementation of the first aspect, in a seventh possible implementation, in response to that the voltage of the power battery is less than or equal to the preset battery voltage, the controller outputs the second control signal to control the output currents of the inverter circuit and the direct current converter circuit. In response to that the voltage of the power battery is greater than the preset battery voltage, the controller outputs a fourth control signal to control the output currents of the inverter circuit and the direct current converter circuit. In this embodiment of this application, when the voltage of the power battery is greater than the preset battery voltage, a harmonic may be injected into the output current of the inverter circuit and the output current of the direct current converter circuit, that is, the harmonic is injected into a current of the three-phase stator winding and the current of the rotor winding, to further increase the heat generated by the drive motor and improve heating efficiency of the power battery.

With reference to the fifth possible implementation of the first aspect or with reference to the sixth possible implementation of the first aspect, in an eighth possible implementation, in response to that the voltage of the power battery is less than or equal to the preset battery voltage, the controller controls the output current of the inverter circuit and the output current of the direct current converter circuit to satisfy the second preset condition. In response to that the voltage of the power battery is greater than the preset battery voltage, the controller controls the output current of the inverter circuit and the output current of the direct current converter circuit to satisfy a fourth preset condition. In this case, the fourth condition is that the torque of the drive motor is zero. In this case, a quadrature-axis current of the three-phase stator winding includes a direct current component and at least one alternating current component. The current of the rotor winding includes a direct current component and at least one alternating current component. The direct current component of the quadrature-axis current of the three-phase stator winding is in a preset proportion to the direct current component of the rotor winding.

With reference to the first aspect or any possible implementation of the first aspect, in a ninth possible implementation, in response to that a temperature of the three-phase stator winding is greater than a preset stator temperature or a temperature of the rotor winding is greater than a preset rotor temperature, the controller controls the output current of the inverter circuit to switch from satisfying the third preset condition to satisfying the first preset condition or from satisfying the fourth preset condition to satisfying the second preset condition. In this case, the controller controls the output current of the inverter circuit to switch from a mode in which a harmonic is injected to a mode in which no harmonic is not injected. This may reduce a copper loss and an iron loss of the three-phase stator winding, avoid damage caused by excessively high temperatures of the three-phase stator winding and the rotor winding, and ensure high security and reliability.

With reference to the first aspect or any possible implementation of the first aspect, in a tenth possible implementation, in response to that the temperature of the three-phase stator winding is greater than the preset stator temperature or the temperature of the rotor winding is greater than the preset rotor temperature, the controller reduces the output current of the inverter circuit. According to this embodiment of this application, damage caused by an excessively high temperature of the three-phase stator winding may be avoided, and high security and reliability are ensured.

According to a second aspect, an embodiment of this application provides a motor control unit. The motor control unit includes a controller and an inverter circuit. The controller may control an output current of the inverter circuit. An output end of the inverter circuit is connected to a three-phase stator winding of a drive motor. An input end of the inverter circuit is connected to a power battery.

In a specific implementation, in response to that a temperature of the power battery is greater than or equal to a preset battery temperature, the inverter circuit outputs a current that satisfies a fifth preset condition, so that the drive motor outputs torque to drive a wheel. In response to that a temperature of the power battery is less than a preset battery temperature, the inverter circuit outputs a current that satisfies a sixth preset condition, to increase heat generated by the three-phase stator winding of the drive motor, and adjusts the output current based on a result of comparison between a voltage of the power battery and a preset battery voltage, to change the heat generated by the three-phase stator winding of the drive motor.

With reference to the second aspect, in a first possible implementation, in response to that the temperature of the power battery is less than the preset battery temperature, the inverter circuit outputs the current that satisfies the sixth preset condition, so that the output torque of the drive motor is zero.

With reference to the second aspect or with reference to the first possible implementation of the second aspect, in a second possible implementation, the motor control unit further includes a direct current converter circuit. An output end of the direct current converter circuit is connected to a rotor winding of the drive motor. An input end of the direct current converter circuit is connected to the power battery. The sixth preset condition includes a first preset condition, a second preset condition, a third preset condition, and a fourth preset condition.

In a specific implementation, when the inverter circuit outputs a current that satisfies the first preset condition or the third preset condition, a direct current component of a quadrature-axis current of the three-phase stator winding is zero. When the inverter circuit and the direct current converter circuit output currents that satisfy the third preset condition or the fourth preset condition, an alternating current component of the quadrature-axis current of the three-phase stator winding is not zero. When the inverter circuit and the direct current converter circuit output currents that satisfy the second preset condition or the fourth preset condition, a direct-axis current of the three-phase stator winding is in a preset proportion to a current of the rotor winding.

With reference to the second possible implementation of the second aspect, in a third possible implementation, in response to that the temperature of the power battery is less than the preset battery temperature, the inverter circuit outputs the current that satisfies the first preset condition.

With reference to the second possible implementation of the second aspect, in a fourth possible implementation, in response to that the voltage of the power battery is less than or equal to the preset battery voltage, the inverter circuit outputs the current that satisfies the first preset condition. In response to that the voltage of the power battery is greater than the preset battery voltage, the inverter circuit outputs the current that satisfies the third preset condition.

With reference to the second possible implementation of the second aspect, in a fifth possible implementation, in response to that the temperature of the power battery is less than the preset battery temperature, the direct current converter circuit and the inverter circuit output the currents that satisfy the second preset condition, so that the output torque of the drive motor is zero.

With reference to the second possible implementation of the second aspect, in a sixth possible implementation, in response to that the voltage of the power battery is less than or equal to the preset battery voltage, the inverter circuit and the direct current converter circuit output the currents that satisfy the second preset condition. In response to that the voltage of the power battery is greater than the preset battery voltage, the inverter circuit and the direct current converter circuit output the currents that satisfy the fourth preset condition.

With reference to the second possible implementation of the second aspect, in a seventh possible implementation, when the inverter circuit and the direct current converter circuit output the currents that satisfy the fourth preset condition, frequencies of an alternating current component of the direct-axis current of the three-phase stator winding and an alternating current component of the current of the rotor winding are different. According to this embodiment of this application, mutual coupling of an alternating current component of a current of the three-phase stator winding and the alternating current component of the current of the rotor winding may be avoided, thereby avoiding the drive motor generating torque.

According to a third aspect, an embodiment of this application provides an electric drive system. The electric drive system includes an inverter circuit, a direct current converter circuit, a drive motor, and the controller with reference to the first aspect or with reference to any possible implementation of the first aspect. The electric drive system is connected to a power battery. In a specific implementation, the drive motor includes a rotor winding and a three-phase stator winding. In this case, the three-phase stator winding is connected to an output end of the inverter circuit. The rotor winding is connected to an output end of the direct current converter circuit. An input end of the inverter circuit and an input end of the direct current converter circuit are connected to the power battery. A control end of the inverter circuit and a control end of the direct current converter circuit are connected to the controller.

According to a fourth aspect, an embodiment of this application provides an electric vehicle. The electric vehicle includes a power battery and the electric drive system with reference to the second aspect. The power battery may supply power to the electric drive system.

It should be understood that mutual reference may be made for implementation and beneficial effects of the foregoing aspects of this application.

**BRIEF DESCRIPTION OF DRAWINGS**

FIG. 1 shows a heating apparatus for a power battery according to the conventional technology;

FIG. 2 is a schematic diagram of a scenario of an electric vehicle according to an embodiment of this application;

FIG. 3 is a schematic diagram of a structure of an electric drive system according to an embodiment of this application;

FIG. 4 is a schematic diagram of a structure of a partial chassis of an electric vehicle according to an embodiment of this application;

FIG. 5 is a schematic diagram of a circuit of an electric drive system according to an embodiment of this application;

FIG. 6 is a schematic flowchart of controlling an electric drive system to generate heat according to an embodiment of this application;

FIG. 7 is a schematic diagram of a three-phase current of a motor and dq coordinates;

FIG. 8 is still another schematic flowchart of controlling an electric drive system to generate heat according to an embodiment of this application;

FIG. 9 is still another schematic flowchart of controlling an electric drive system to generate heat according to an embodiment of this application;

FIG. 10 is still another schematic flowchart of controlling an electric drive system to generate heat according to an embodiment of this application; and

FIG. 11 is a schematic flowchart of performing heat exchange between a drive motor and a power battery according to an embodiment of this application.

**DESCRIPTION OF EMBODIMENTS**

The following clearly describes the technical solutions in embodiments of this application with reference to the accompanying drawings in embodiments of this application. It is clear that the described embodiments are some but not all of embodiments of this application. All other embodiments obtained by a person of ordinary skill in the art based on embodiments of this application without creative efforts shall fall within the protection scope of this application.

The following further describes implementation of the technical solutions of this application in detail with reference to the accompanying drawings.

FIG. 2 is a schematic diagram of a scenario of an electric vehicle according to an embodiment of this application. As shown in FIG. 2, the electric vehicle 20 includes an electric drive system 201 and a power battery 202. The power battery 202 is connected to the electric drive system 201. The power battery 202 provides power to the electric drive system 201.

A cooling loop is disposed between the power battery 202 and the electric drive system 201. The electric drive system 201 performs heat exchange with the power battery 202 through the cooling loop. In this case, heat generated by the electric drive system 201 may heat the power battery 202.

With reference to a structure of the electric drive system 201, the following describes, by using an example, how the electric drive system 201 generates heat and how the power battery 202 is heated.

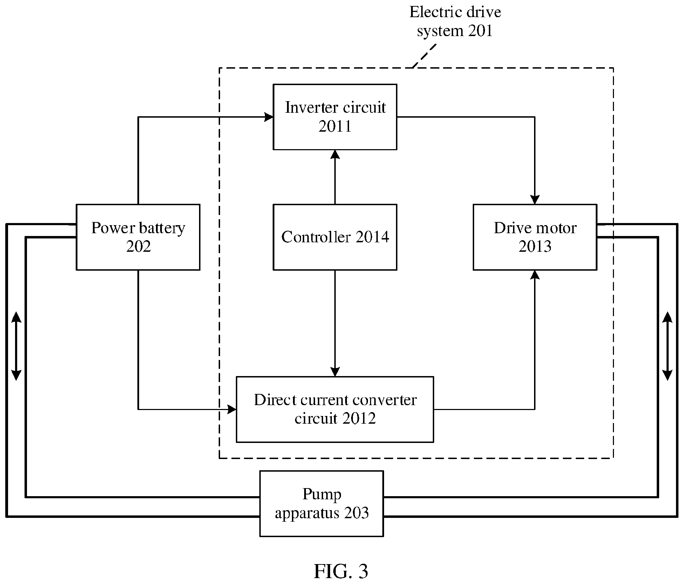

FIG. 3 is a schematic diagram of the structure of the electric drive system according to an embodiment of this application. As shown in FIG. 3, the electric drive system 201 includes an inverter circuit 2011, a direct current converter circuit 2012, a drive motor 2013, and a controller 2014.

An input end of the inverter circuit 2011 and an input end of the direct current converter circuit 2012 are connected to the power battery 202. The power battery 202 may be, for example, a lithium-ion battery, a lead-acid battery, or a solar cell. A type of the power battery is not limited in this application.

An output end of the inverter circuit 2011 is connected to the drive motor 2013, and is specifically connected to a three-phase stator winding of the drive motor 2013. The inverter circuit 2011 may convert a direct current output by the power battery 202 into a three-phase alternating current. To be specific, in this embodiment of this application, an output current of the inverter circuit 2011 is specifically implemented as the three-phase alternating current. The inverter circuit transmits the output three-phase alternating current to the three-phase stator winding respectively. The inverter circuit 2011 may be specifically implemented as a three-phase three-level inverter, a three-phase two-level inverter, or the like.

An output end of the direct current converter circuit 2012 is connected to the drive motor 2013, and is specifically connected to a rotor winding of the drive motor 2013. The direct current converter circuit 2012 may convert a direct current voltage output by the power battery 202. In this case, the direct current converter circuit 2012 may be specifically implemented as a DC/DC converter, for example, a buck converter, a boost converter, or a buck-boost converter.

The controller 2014 is connected to a control end of the inverter circuit 2011 and a control end of the direct current converter circuit 2012. Then, the controller 2014 may send a control signal to the inverter circuit 2011 and the direct current converter circuit 2012, thereby controlling the output current of the inverter circuit 2011 and an output current of the direct current converter circuit 2012. For example, the controller 2014 may be specifically implemented as a central processing unit (central processing unit, CPU), another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, or a discrete hardware component.

In addition, the output current of the inverter circuit 2011 flows into the three-phase stator winding of the drive motor 2013, and the three-phase stator winding generates joule heat. The output current of the direct current converter circuit 2012 flows into the rotor winding of the drive motor 2013, and the rotor winding generates joule heat. In this case, the drive motor 2013 generates heat.

The cooling loop is disposed between the drive motor 2013 and the power battery 202. The cooling loop includes a motor coolant and a battery coolant. In addition, a pump apparatus 203 is disposed in the cooling loop. The pump apparatus 203 may drive the motor coolant and the battery coolant to circulate in the cooling loop. The motor coolant may absorb the heat generated by the drive motor 2013. The motor coolant performs heat exchange with the battery coolant in the cooling loop. The battery coolant may heat the power battery 202 through heat transfer.

In an embodiment, the controller 2014 and the inverter circuit 2011 may be integrated into a motor control unit. The direct current converter circuit 2012 may be integrated into the motor control unit, or may be disposed separately. Optionally, the inverter circuit 2011 is integrated into a motor control unit, and the controller 2014 and the direct current converter circuit 2012 are disposed separately. In conclusion, specific positions of the controller, the inverter circuit, and the direct current converter circuit are not limited in this embodiment of this application.

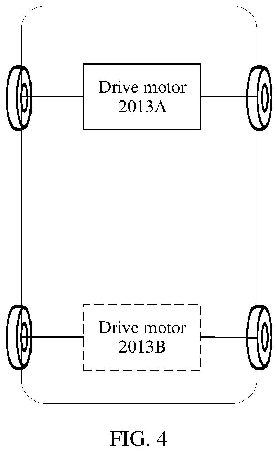

In an embodiment, the electric drive system 201 may include at least two drive motors. In this case, the drive motor 2013 shown in FIG. 3 may be any drive motor in the electric drive system 201. In FIG. 4, an example in which the electric drive system 201 includes two drive motors is used. For example, the electric drive system 201 includes a drive motor 2013A and a drive motor 2013B. The drive motor 2013A drives front wheels of the electric vehicle 20, and the drive motor 2013B drives rear wheels of the electric vehicle 20. The drive motor 2013 in this application may be any one of the drive motor 2013A and the drive motor 2013B.

For example, the drive motor 2013A may be a permanent magnet synchronous motor, and is a main drive motor of the electric vehicle 20. The drive motor 2013B may be an electrically excited synchronous motor, and is an auxiliary drive motor of the electric vehicle 20. It may be understood that, for example, the drive motor 2013 is specifically implemented as the drive motor 2013B. In this case, during rotation of the drive motor 2013A, the drive motor 2013B may not rotate, and the drive motor 2013B is configured to heat the power battery 202. In this case, an application scenario may be specifically implemented as follows: In a process in which the main drive motor outputs torque to drive the wheel of the electric vehicle, output torque of the auxiliary drive motor is zero, and the auxiliary drive motor heats the power battery 202. In this case, the auxiliary drive motor is in an idle state. Alternatively, the auxiliary drive motor may output torque to drive the wheels of the electric vehicle, and the auxiliary drive motor heats the power battery 202 in a process of driving the wheels of the electric vehicle. It should be explained that driving the electric vehicle may be understood as providing torque for the electric vehicle, and idling may be understood as that the auxiliary drive motor does not provide torque for the electric vehicle, that is, the output torque is zero.

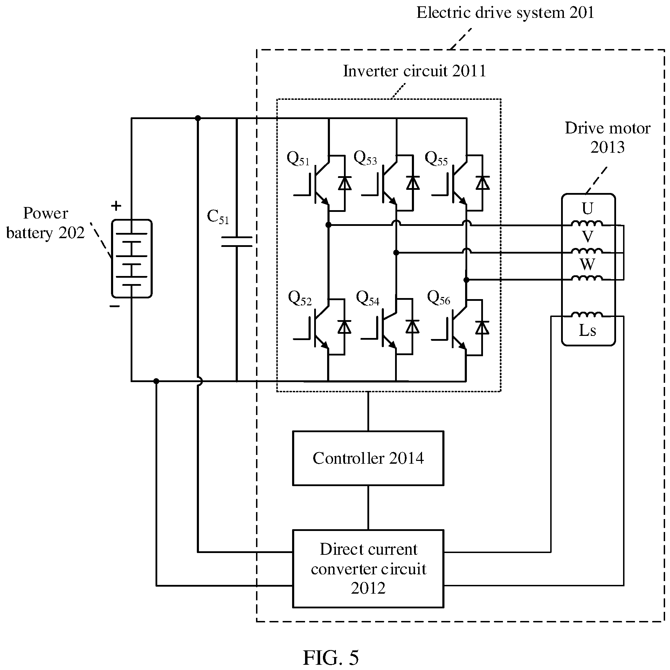

For example, an example in which the inverter circuit 2011 is specifically implemented as a three-phase two-level inverter is used. A circuit of the electric drive system 201 may be shown in FIG. 5.

In this case, the inverter circuit 2011 includes three bridge arms. Each bridge arm includes two switch units connected in series. The switch unit may include at least one switch connected in series or in parallel. In specific practice, the switch unit may select, based on a voltage and a current of the inverter circuit, a plurality of switches connected in series or in parallel. The switch may be specifically implemented as an insulated gate bipolar transistor (Insulated Gate Bipolar Transistor, IGBT) and an anti-parallel diode of the insulated gate bipolar transistor, a metal-oxide semiconductor field-effect transistor (Metal-Oxide Semiconductor Field-Effect Transistor, MOSFET), or the like. In conclusion, a switch type and a quantity of switches in the switch unit are not limited in this embodiment of this application.

For example, an example in which the switch included in the bridge arm is specifically implemented as an IGBT and an anti-parallel diode of the IGBT is used. One end of each bridge arm is connected to a positive end of the power battery 202. That is, a collector of a switching transistor $Q_{51}$, a collector of a switching transistor $Q_{53}$, and a collector of a switching transistor $Q_{55}$ are connected to the positive end of the power battery 202.

The other end of each bridge arm is connected to a negative end of the power battery 202. That is, an emitter of a switching transistor $Q_{52}$, an emitter of a switching transistor $Q_{54}$, and an emitter of a switching transistor $Q_{56}$ are connected to the negative end of the power battery 202.

Optionally, a capacitor unit is connected in parallel between the positive end and the negative end of the power battery 202. The capacitor unit includes at least one capacitor, for example, a capacitor $C_{51}$. The capacitor $C_{51}$ may filter the output voltage of the power battery 202.

A midpoint of each bridge arm is connected to a corresponding stator winding. That is, an emitter of the switching transistor $Q_{51}$ and a collector of the switching transistor $Q_{52}$ are connected to a stator winding U of the drive motor 2013. An emitter of the switching transistor $Q_{53}$ and a collector of the switching transistor $Q_{54}$ are connected to a stator winding V of the drive motor 2013. An emitter of the switching transistor $Q_{55}$ and a collector of the switching transistor $Q_{56}$ are connected to a stator winding W of the drive motor 2013.

The positive end of the power battery 202 is further connected to a positive input end of the direct current converter circuit 2012. The negative end of the power battery 202 is further connected to a negative input end of the direct current converter circuit 2012. A positive output end of the direct current converter circuit 2012 is connected to one end of a rotor winding Ls of the drive motor 2013. A negative output end of the direct current converter circuit 2012 is connected to the other end of the rotor winding Ls of the drive motor 2013.

In an embodiment, the controller 2014 may be connected to a gate of each switching transistor in the inverter circuit 2011 to control turn-on or turn-off of each switching transistor in the inverter circuit 2011, thereby controlling the output current of the inverter circuit 2011.

In an embodiment, the controller 2014 may further be connected to the control end of the direct current converter circuit 2012, that is, connected to a control end of each switching transistor in the direct current converter circuit 2012, to control turn-on or turn-off of each switching transistor in the direct current converter circuit 2012, thereby controlling the output current of the direct current converter circuit 2012.

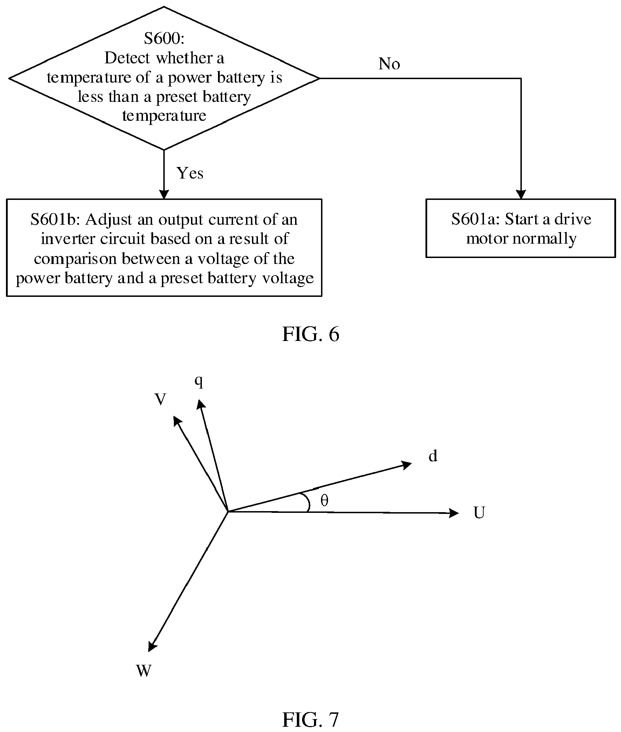

In an embodiment, the controller 2014 may execute a schematic flowchart shown in FIG. 6, thereby controlling the output current of the inverter circuit 2011. As shown in FIG. 6, the controller performs the following steps.

Step S600: The controller 2014 detects whether a temperature of the power battery 202 is less than a preset battery temperature. If the temperature of the power battery 202 is less than the preset battery temperature, the controller 2014 performs step S601b. If the temperature of the power battery 202 is not less than the preset battery temperature, the controller 2014 performs step S601a to normally start the drive motor 2013.

In an embodiment, the controller 2014 may obtain the temperature of the power battery 202 by using a battery management system (Battery Management System, BMS). Alternatively, the controller 2014 may obtain the temperature of the power battery 202 by using a vehicle control unit (Vehicle Control Unit, VCU).

The controller 2014 compares the temperature of the power battery 202 with the preset battery temperature. The preset battery temperature is any temperature in an optimal operating temperature range of the power battery 202. The preset battery temperature may be adjusted based on an actual operating condition of the power battery 202, for example, may be adjusted based on usage time or remaining power of the power battery 202.

Step S601a: In response to that the temperature of the power battery 202 is greater than or equal to the preset battery temperature, the controller 2014 normally starts the drive motor 2013. In this case, the controller 2014 may control the output current of the inverter circuit 2011, so that the drive motor 2013 outputs torque to drive the wheels of the electric vehicle.

Step S601b: In response to that the temperature of the power battery 202 is less than the preset battery temperature, the controller 2014 adjusts the output current of the inverter circuit 2011 based on a result of comparison between the voltage of the power battery 202 and a preset battery voltage. In this case, the controller 2014 controls the output current of the inverter circuit 2011 to increase heat generated by the three-phase stator winding of the drive motor 2013.

The controller 2014 may specifically control the output current of the inverter circuit 2011 by outputting a control signal to the inverter circuit 2011. The control signal may be a pulse width modulation (Pulse Width Modulation, PWM) signal.

For example, when the temperature of the power battery 202 is less than the preset battery temperature, the controller 2014 may output a first control signal to the inverter circuit 2011 to control the output current of the inverter circuit 2011, so that the output torque of the drive motor 2013 is zero.

For another example, when the temperature of the power battery 202 is less than the preset battery temperature, the controller 2014 may control the output current of the inverter circuit 2011 to satisfy a first preset condition.

It may be understood that the output current of the inverter circuit 2011 is a current flowing into the three-phase stator winding, that is, a current of the stator winding U, a current of the stator winding V, and a current of the stator winding W. In this case, the first control signal may control a current of the three-phase stator winding to satisfy the first preset condition.

Currently, the current of the three-phase stator winding of the drive motor 2013 may be analyzed through Park transformation (Park Transformation). As shown in FIG. 7, three-phase coordinates of the current of the three-phase stator winding are converted into d-axis and q-axis coordinates. A d-axis (direct axis) is also referred to as a direct axis. The d-axis is parallel to a rotating shaft (a magnetic pole axis) of the drive motor 2013. A q-axis (quadrature axis) is also referred to as a quadrature axis. The q-axis is perpendicular to the magnetic pole axis of the drive motor 2013, that is, is perpendicular to the d-axis.

In this case, a d-axis current and a q-axis current are respectively equal to projections of the three-phase stator winding on the d-axis and the q-axis. A relationship between the d-axis current and the current of the three-phase stator winding and a relationship between the q-axis current and the current of the three-phase stator winding may be represented by using the following formula:

$$\begin{cases} I_d = \frac{2}{3}\left[ I_U \cos\theta + I_V \cos\left(\theta - \frac{2\pi}{3}\right) + I_W \cos\left(\theta + \frac{2\pi}{3}\right) \right] \\ I_q = \frac{2}{3}\left[ I_U \sin\theta + I_V \sin\left(\theta - \frac{2\pi}{3}\right) + I_W \sin\left(\theta + \frac{2\pi}{3}\right) \right] \end{cases} \quad \text{Formula 1}$$

$I_d$ is the d-axis current. $I_q$ is the q-axis current. $I_U$ is the current of the stator winding U. $I_V$ is the current of the stator winding V. $I_W$ is the current of the stator winding W. $\theta = \omega t$. $\omega$ is an angular frequency of a current signal of the stator winding in each phase.

The first preset condition is that the output torque of the drive motor 2013 is zero. In this case, both a direct current component and an alternating current component of the q-axis current of the three-phase stator winding are zero. That is, the q-axis current of the three-phase stator winding is zero.

The torque $T_e$ of the drive motor 2013 may be represented by using the following formula:

$$T_e = 1.5p * I_q * \left[ M_f I_f + \left( L_d - L_q \right) I_d \right] \quad \text{Formula 2}$$

$p$ is a constant. $M_f$ is mutual inductance of the rotor winding Ls. $I_f$ is a current of the rotor winding Ls. $L_d$ is d-axis inductance. $L_q$ is q-axis inductance. $M_f$, $L_d$, and $L_q$ are all device attributes of the drive motor 2013.

Therefore, according to Formula 2, the first preset condition may be represented by using the following formula:

$$I_q = 0 \qquad \text{Formula 3}$$

With reference to Formula 1 and Formula 3, it may be obtained that a current relationship of the three-phase stator winding in this case is:

$$I_U \sin\theta + I_V \sin\left(\theta - \frac{2\pi}{3}\right) + I_W \sin\left(\theta + \frac{2\pi}{3}\right) = 0 \qquad \text{Formula 4}$$

The controller 2014 controls the output current of the inverter circuit 2011 to satisfy the first preset condition, that is, the current of the three-phase stator winding of the drive motor 2013 satisfies Formula 4. It may be understood that there may be a plurality of current combinations when the current of the three-phase stator winding satisfies Formula 4.

The joule heat generated by the drive motor 2013 may be represented by using the following formula:

$$Q = I_d{}^2 \times R_s + I_f{}^2 \times R_f \qquad \text{Formula 5}$$

$R_s$ is impedance of the three-phase stator winding. $R_f$ is impedance of the rotor winding.

One of the plurality of current combinations that satisfy Formula 4 may minimize the heat generated by the drive motor 2013, that is, minimize a value of Q in Formula 5. In this embodiment of this application, the current combination that minimizes the heat generated by the drive motor 2013 is discarded, and a current combination other than the current combination that minimizes the heat is selected, thereby increasing the heat generated by the drive motor 2013. Further, a current combination that maximizes the heat generated by the drive motor 2013 may be selected.

For example, the plurality of current combinations that satisfy Formula 4 include a current combination A and a current combination B. The current combination A specifically includes $I_U = 2$, $I_V = 1$, and $I_W = 2$. The current combination B specifically includes $I_U = 4$, $I_V = 2$, and $I_W = 3$. It is assumed that the current combination A and the current combination B are respectively substituted into Formula 1 to obtain, through calculation, corresponding $I_d$: 1 A and 0.5 A. In this case, it can be learned that heat of the drive motor obtained by substituting the current combination A into Formula 5 for calculation is greater than that of the drive motor obtained by substituting the current combination B into Formula 5 for calculation. Therefore, the controller may control the output current of the inverter circuit to be the combination A.

In conclusion, according to this embodiment of this application, a current combination capable of increasing the heat generated by the three-phase stator winding may be selected from the current combinations that satisfy the first preset condition, that is, a current combination capable of increasing the heat generated by the drive motor is selected.

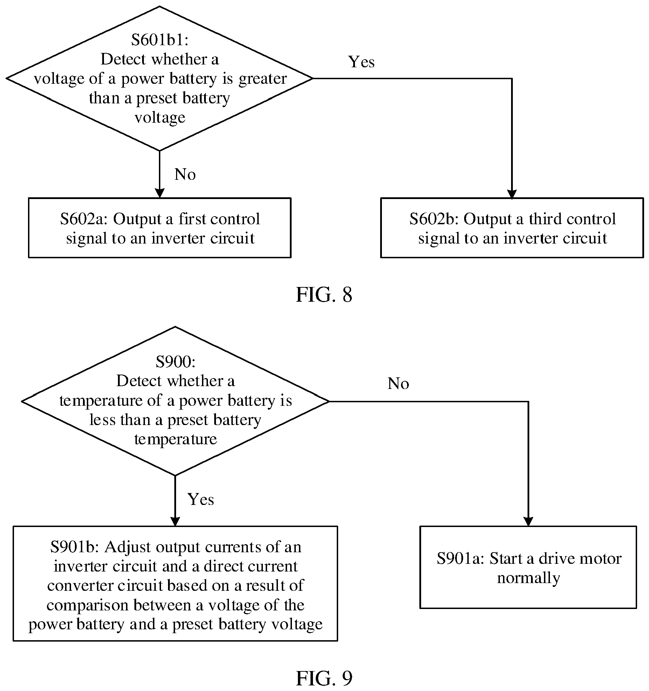

In an embodiment, the controller 2014 may further execute a schematic flowchart shown in FIG. 8, thereby adjusting the output current of the inverter circuit 2011. As shown in FIG. 8, the controller performs the following steps.

Step S601b1: The controller 2014 detects whether the voltage of the power battery 202 is greater than the preset battery voltage. If the voltage of the power battery 202 is greater than the preset battery voltage, step S602b is performed. If the voltage of the power battery 202 is not greater than the preset battery voltage, step S602a is performed.

The preset battery voltage represents a voltage required for the power battery 202 to inject a harmonic into the output current of the inverter circuit 2011. It may be understood that determining of the voltage of the power battery is added in step S601b1, and step S602a and step S602b may be switched to be performed. Therefore, electric energy utilization efficiency of the power battery may be improved, and electric energy waste may be reduced. For example, the controller 2014 may obtain the voltage of the power battery 202 by using a voltage sampling circuit, and compare the voltage of the power battery 202 with the preset battery voltage.

In an embodiment, in response to that the voltage of the power battery 202 is less than or equal to the preset battery voltage, the controller 2014 performs step S602a, that is, the controller 2014 outputs the first control signal to control the output current of the inverter circuit 2011. It may be understood that in this case, the first control signal may control the output current of the inverter circuit 2011 to satisfy the first preset condition.

In an embodiment, in response to that the voltage of the power battery 202 is greater than the preset battery voltage, the controller 2014 performs step S602b, that is, outputs a third control signal to control the output current of the inverter circuit 2011. In this case, the third control signal may control the output current of the inverter circuit 2011 to satisfy a third preset condition. The third preset condition is that the output torque of the drive motor 2013 is zero. In this case, the q-axis current of the three-phase stator winding includes a direct current component and at least one alternating current component. The direct current component of the q-axis current is zero, and the alternating current component is not zero.

During specific implementation, the output current of the inverter circuit 2011 includes a direct current component and at least one alternating current component. In this case, the current of the three-phase stator winding includes the direct current component and the at least one alternating current component, that is, a harmonic is injected into the current of the three-phase stator winding. In this case, the current of the three-phase stator winding may be specifically represented as:

$$\begin{cases} I_d = I_{d\_0} + I_{d\_0}\cos\omega_1 t \\ I_q = I_{q\_0} + I_{q\_0}\cos\omega_1 t \end{cases} \quad \text{Formula 6}$$

$I_{d\_0}$ is a direct current component of the d-axis current. $I_{d\_0}\cos\omega_1 t$ is an alternating current component of the d-axis current. $I_{q\_0}$ is the direct current component of the q-axis current. $I_{q\_0}\cos\omega_1 t$ is the alternating current component of the q-axis current.

It should be noted that Formula 6 is merely an example. In an embodiment, the d-axis current and the q-axis current may further include a plurality of alternating current components, which are not enumerated herein.

The torque $T_e{'}$ of the drive motor 2013 may be represented by using the following formula:

$$T_e{'} = 1.5p * I_{q\_0} * \left[M_f I_f + \left(L_d - L_q\right)I_{d\_0}\right] \quad \text{Formula 7}$$

Therefore, according to Formula 7, the third preset condition may be represented by using the following formula:

$$I_{q\_0} = 0 \quad \text{Formula 8}$$

Based on Park transformation, a relationship between the direct current component of the d-axis current and the current of the three-phase stator winding and a relationship between the direct current component of the q-axis current and the current of the three-phase stator winding may be obtained as follows:

$$\begin{cases} I_{d\_0} = \frac{2}{3}\left[I_U \cos\theta + I_V \cos\left(\theta - \frac{2\pi}{3}\right) + I_W \cos\left(\theta + \frac{2\pi}{3}\right)\right] \\ I_{q\_0} = \frac{2}{3}\left[I_U \sin\theta + I_V \sin\left(\theta - \frac{2\pi}{3}\right) + I_W \sin\left(\theta + \frac{2\pi}{3}\right)\right] \end{cases} \quad \text{Formula 9}$$

With reference to Formula 8 and Formula 9, a current relationship of the three-phase stator winding in this case may still be obtained, as shown in Formula 4.

In this case, the current of the three-phase stator winding enables the joule heat generated by the drive motor 2013 to be represented by using Formula 5. However, compared with the first control signal in step S602a that controls the output current of the inverter circuit 2011 to include only the direct current component, the third control signal in this embodiment of this application controls the output current of the inverter circuit 2011 to include both the direct current component and the alternating current component. That is, in this embodiment of this application, the harmonic is injected into the current of the three-phase stator winding. This may increase a copper loss and an iron loss of the three-phase stator winding, thereby further increasing the heat generated by the drive motor.

In general, the current of the three-phase stator winding satisfies the third preset condition. Similarly, there are also a plurality of current combinations that satisfy the third preset condition. In this embodiment of this application, a current combination capable of increasing the heat generated by the three-phase stator winding may be selected from the current combinations that satisfy the third preset condition, and a harmonic is injected into the current combination.

In an embodiment, the first control signal and the third control signal are PWM signals. A duty cycle of the third control signal is greater than that of the first control signal. That is, the controller 2014 injects the harmonic into the current of the three-phase stator winding by increasing a duty cycle of the control signal for the inverter circuit 2011.

In an embodiment, the controller 2014 monitors a temperature of the three-phase stator winding in real time by using a first temperature sensor. The first temperature sensor may be disposed on a surface of the three-phase stator winding. The controller 2014 compares the detected temperature of the three-phase stator winding with a preset stator temperature. The preset stator temperature may be understood as a safe temperature of the three-phase stator winding. A same safe temperature may be set for the three-phase stator winding. If the temperature of the three-phase stator winding is greater than the preset stator temperature, the controller 2014 selects, from the plurality of current combinations that satisfy Formula 4, a current combination that enables the drive motor to generate a small amount of heat. For example, the controller 2014 reduces the output current of the inverter circuit 2011 by reducing the duty cycle of the first control signal, so that the temperature of the three-phase stator winding falls within a safe temperature range. In this case, the torque of the drive motor is still zero. According to this embodiment of this application, damage caused by an excessively high temperature of the three-phase stator winding may be avoided, and high security and reliability are ensured.

In an embodiment, when the temperature of the three-phase stator winding is greater than the preset stator temperature, the controller 2014 controls the output current of the inverter circuit 2011 to switch from satisfying the third preset condition to satisfying the first preset condition. In this case, the controller 2014 controls the output current of the inverter circuit to switch from a mode in which the harmonic is injected to a mode in which no harmonic is injected. This may reduce the copper loss and the iron loss of the three-phase stator winding, avoid damage caused by an excessively high temperature of the three-phase stator winding, and ensure high security and reliability.

In an embodiment, after the controller 2014 determines the output current of the inverter circuit 2011, that is, after the current of the three-phase stator winding is determined, the controller 2014 may separately determine a voltage amplitude and a voltage phase of the three-phase stator winding based on Ohm's law and the current of the three-phase stator winding. Therefore, the controller may determine the duty cycle of the control signal for the inverter circuit 2011 based on the voltage amplitude of the three-phase stator winding, and determine sending time of the control signal for the inverter circuit 2011 based on the voltage phase of the three-phase stator winding.

In an embodiment, the controller 2014 may execute a schematic flowchart shown in FIG. 9, thereby controlling the output currents of the inverter circuit 2011 and the direct current converter circuit 2012. As shown in FIG. 9, the controller performs the following steps.

Step S900: The controller 2014 detects whether a temperature of the power battery 202 is less than a preset battery temperature. If the temperature of the power battery 202 is less than the preset battery temperature, the controller 2014 performs step S901b. If the temperature of the power battery 202 is not less than the preset battery temperature, the controller 2014 performs step S901a to normally start the drive motor 2013.

It may be understood that, for detection, by the controller 2014, of a value relationship between the temperature of the power battery 202 and the preset battery temperature, refer to the foregoing description of step S600. Details are not described herein again.

Step S901a: In response to that the temperature of the power battery 202 is greater than or equal to the preset battery temperature, the controller 2014 normally starts the drive motor 2013. In this case, the controller 2014 may control the output currents of the inverter circuit 2011 and the direct current converter circuit 2012, so that the drive motor 2013 outputs the torque to drive the wheel of the electric vehicle.

Step S901b: In response to that the temperature of the power battery 202 is less than the preset battery temperature, the controller 2014 adjusts the output currents of the inverter circuit 2011 and the direct current converter circuit 2012 based on a result of comparison between the voltage of the power battery 202 and a preset battery voltage. In this case, the controller 2014 controls the output currents of the inverter circuit 2011 and the direct current converter circuit 2012 to increase heat generated by the three-phase stator winding of the drive motor 2013. It can be learned that, compared with the foregoing step S601b, in this case, the controller 2014 additionally controls the output current of the direct current converter circuit 2012, that is, additionally controls a current flowing into the rotor winding.

The controller 2014 may control the output currents of the inverter circuit 2011 and the direct current converter circuit 2012 by outputting a control signal to the inverter circuit 2011 and the direct current converter circuit 2012. It should be explained that a control signal output by the controller 2014 to the inverter circuit 2011 is different from that output to the direct current converter circuit 2012. A second control signal and a fourth control signal in this application each include an inverter control sub-signal corresponding to the inverter circuit 2011, and also include a voltage transformation control sub-signal corresponding to the direct current converter circuit 2012.

For example, when the temperature of the power battery 202 is less than the preset battery temperature, the controller 2014 may output an inverter control sub-signal of the second control signal to the inverter circuit 2011, and output a voltage transformation control sub-signal of the second control signal to the direct current converter circuit 2012, to control the output currents of the inverter circuit 2011 and the direct current converter circuit 2012, so that the output torque of the drive motor 2013 is zero.

For another example, when the temperature of the power battery 202 is less than the preset battery temperature, the controller 2014 may control the output current of the inverter circuit 2011 to be a first current, that is, control a current flowing into the three-phase stator winding to be the first current, and the controller 2014 controls the output current of the direct current converter circuit 2012 to be a second current, that is, controls the current flowing into the rotor winding to be the second current. The first current and the second current satisfy a second preset condition. The second preset condition is that the torque of the drive motor 2013 is zero, and the first current is in a preset proportion to the second current.

In this embodiment of this application, a current of the three-phase stator winding may still be analyzed through Park transformation. In other words, Formula 1 is still true.

According to Formula 2, the second preset condition may be represented by using the following formula:

$$I_d = M_f I_f / \left( L_q - L_d \right) \quad \text{Formula 10}$$

With reference to Formula 1 and Formula 10, it may be obtained that a relationship between the current of the three-phase stator winding and the current of the rotor winding in this case is:

$$\frac{2}{3}\left[ I_U \cos\theta + I_V \cos\left(\theta - \frac{2\pi}{3}\right) + I_W \cos\left(\theta + \frac{2\pi}{3}\right)\right] = M_f I_f / \left( L_q - L_d \right) \quad \text{Formula 11}$$

The controller 2014 controls the output current of the inverter circuit 2011 and the output current of the direct current converter circuit 2012 to satisfy the second preset condition, that is, the current of the three-phase stator winding of the drive motor 2013 and the current of the rotor winding satisfy Formula 11. It may be understood that there may also be a plurality of current combinations when the current of the three-phase stator winding and the current of the rotor winding satisfy Formula 11.

In this case, a current of the rotor winding Ls is not zero, and the joule heat generated by the drive motor 2013 may be represented by using the following formula:

$$Q' = I_d{}^2 \times R_s + I_q{}^2 \times R_s + I_f{}^2 \times R_f \quad \text{Formula 12}$$

One of the plurality of current combinations that satisfy Formula 11 may minimize the heat generated by the drive motor 2013, that is, minimize a value of Q' in Formula 12. Similarly, in this embodiment of this application, the current combination that minimizes the heat generated by the drive motor 2013 is discarded, and a current combination other than the current combination that minimizes the heat is selected, thereby increasing the heat generated by the drive motor. Further, a current combination that maximizes the heat generated by the drive motor 2013 may be selected.

For example, the plurality of current combinations that satisfy Formula 11 include a current combination C and a current combination D. The current combination C specifically includes $I_U = 2$, $I_V = 1$, and $I_W = 2$. The current combination D specifically includes $I_U = 4$, $I_V = 2$, and $I_W = 3$. It is assumed that the current combination C is substituted into Formula 1 and Formula 11 to obtain $I_d = 1A$, $I_q = 0.5A$, and $I_f = 0.5A$ through calculation, and the current combination D is substituted into Formula 1 and Formula 11 to obtain $I_d = 2A$, $I_q = 0.5A$, and $I_f = 1A$ through calculation. In this case, it can be learned that heat of the drive motor obtained by substituting the current combination C into Formula 12 for calculation is greater than that of the drive motor obtained by substituting the current combination D into Formula 12 for calculation. Therefore, the controller controls the output current of the inverter circuit and the output current of the direct current converter circuit to be the combination C.

In conclusion, according to this embodiment of this application, a current combination capable of increasing the heat generated by the three-phase stator winding and the heat generated by the rotor winding may be selected from the current combinations that satisfy the second preset condition. Therefore, in this embodiment of this application, compared with the foregoing embodiment described with reference to FIG. 6, in addition to increasing the heat generated by the three-phase stator winding, the heat generated by the rotor winding may be further increased, thereby increasing the heat generated by the drive motor.

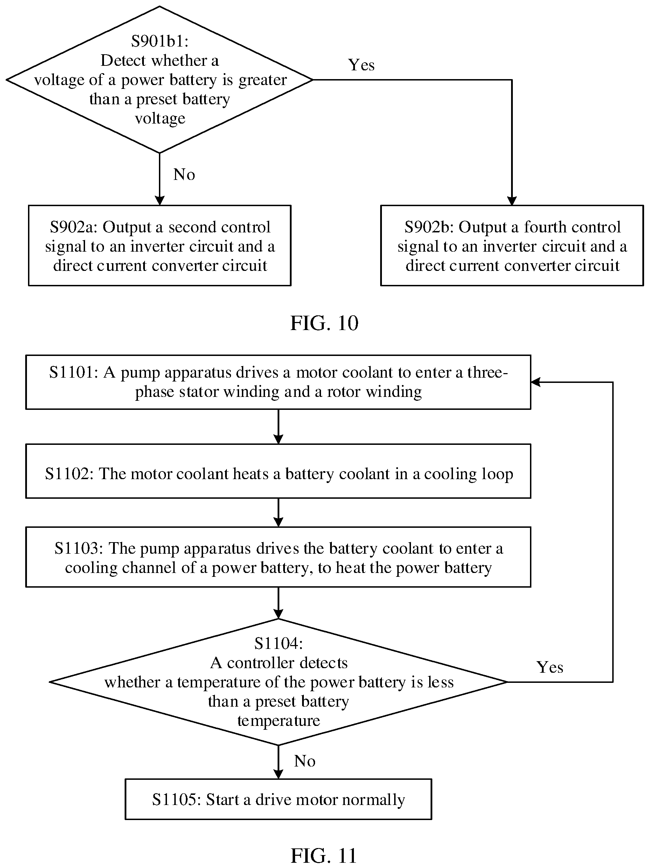

In an embodiment, the controller 2014 may further execute a schematic flowchart shown in FIG. 10, thereby adjusting the output currents of the inverter circuit 2011 and the direct current converter circuit 2012. As shown in FIG. 10, the controller performs the following steps.

Step S901b1: The controller 2014 detects whether the voltage of the power battery 202 is greater than the preset battery voltage. If the voltage of the power battery 202 is greater than the preset battery voltage, step S902b is performed. If the voltage of the power battery 202 is not greater than the preset battery voltage, step S902a is performed.

The preset battery voltage represents a voltage required for the power battery 202 to inject a harmonic into the output current of the inverter circuit 2011 and the output current of the direct current converter circuit 2012. It may be understood that determining of the voltage of the power battery is added in step S901b1, and step S902a and step S902b may be switched to be performed. Therefore, electric energy utilization efficiency of the power battery may be improved, and electric energy waste may be reduced.

In an embodiment, in response to that the voltage of the power battery 202 is less than or equal to the preset battery voltage, the controller 2014 performs step S902a, that is, the controller 2014 outputs the second control signal to control the output currents of the inverter circuit 2011 and the direct current converter circuit 2012. That is, the controller 2014 outputs the inverter control sub-signal of the second control signal to the inverter circuit 2011, and outputs the voltage transformation control sub-signal of the second control signal to the direct current converter circuit 2012. In this case, the inverter control sub-signal of the second control signal may control the output current of the inverter circuit 2011 to be the first current, and the voltage transformation control sub-signal of the second control signal may control the output current of the direct current converter circuit 2012 to be the second current. The first current and the second current satisfy the second preset condition.

In an embodiment, in response to that the voltage of the power battery 202 is greater than the preset battery voltage, the controller 2014 performs step S902b, that is, the controller 2014 outputs the fourth control signal to control the output currents of the inverter circuit 2011 and the direct current converter circuit 2012. That is, the controller 2014 outputs the inverter control sub-signal of the fourth control signal to the inverter circuit 2011, and outputs the voltage transformation control sub-signal of the fourth control signal to the direct current converter circuit 2012. In this case, the inverter control sub-signal of the fourth control signal may control the output current of the inverter circuit 2011 to be a third current, and the voltage transformation control sub-signal of the fourth control signal may control the output current of the direct current converter circuit 2012 to be a fourth current. The third current and the fourth current satisfy a fourth preset condition. The fourth condition is that the torque of the drive motor 2013 is zero. In this case, a q-axis current of the three-phase stator winding includes a direct current component and at least one alternating current component. The current of the rotor winding includes a direct current component and at least one alternating current component. The direct current component of the q-axis current of the three-phase stator winding is in a preset proportion to the direct current component of the rotor winding.

During specific implementation, the current of the three-phase stator winding and the current of the rotor winding each include a direct current component and at least one alternating current component, that is, the harmonic is injected into the current of the three-phase stator winding and the current of the rotor winding. In this case, the current of the three-phase stator winding and the current of the rotor winding may be specifically represented as:

$$\begin{cases} I_d = I_{d\_0} + I_{d\_0} \cos \omega_1 t \\ I_q = I_{q\_0} + I_{q\_0} \cos \omega_1 t \\ I_f = I_{f\_0} + I_{f\_0} \cos \omega_2 t \end{cases} \qquad \text{Formula 13}$$

$I_{f\_0}$ is the direct current component of the rotor winding. $I_{f\_0} \cos \omega_2 t$ t is the alternating current component of the rotor winding.

It should be noted that Formula 13 is merely an example. In an embodiment, a d-axis current, the q-axis current, and the current of the rotor winding may further include a plurality of alternating current components, which are not enumerated herein.

The torque $T_e''$ of the drive motor 2013 may be represented by using the following formula:

$$T_e'' = 1.5p * I_{q\_0} * \left[ M_f I_{f\_0} + \left( L_d - L_q \right) I_{d\_0} \right] \quad \text{Formula 14}$$

Therefore, according to Formula 14, the fourth preset condition may be represented by using the following formula:

$$I_{d\_0} = M_f I_{f\_0} / \left( L_q - L_d \right) \qquad \text{Formula 15}$$

Based on Park transformation, a relationship between the direct current component of the d-axis current and the current of the three-phase stator winding and a relationship between the direct current component of the q-axis current and the current of the three-phase stator winding are shown in Formula 9.

With reference to Formula 9 and Formula 15, it may be obtained that a current relationship of the three-phase stator winding in this case is:

$$\frac{2}{3}\left[ I_U \cos \theta + I_V \cos \left( \theta - \frac{2\pi}{3} \right) + I_W \cos \left( \theta + \frac{2\pi}{3} \right) \right] = M_f I_{f\_0} / \left( L_q - L_d \right) \text{Formula 16}$$

In this case, the current of the three-phase stator winding enables the joule heat generated by the drive motor 2013 to be represented by using Formula 12. However, compared with the second control signal in step S902a that controls the output currents of the inverter circuit 2011 and the direct current converter circuit 2012 to include only the direct current components, the fourth control signal in this embodiment of this application controls the output currents of the inverter circuit 2011 and the direct current converter circuit 2012 to include both the direct current components and the alternating current components. That is, in this embodiment of this application, the harmonic is injected into the current of the three-phase stator winding, and the harmonic is injected into the current of the rotor winding. According to this embodiment of this application, a copper loss and an iron loss of the three-phase stator winding may be increased, thereby further increasing the heat generated by the drive motor.

In general, the current of the three-phase stator winding and the current of the rotor winding satisfy the fourth preset condition. Similarly, there are also a plurality of current combinations that satisfy the fourth preset condition. In this embodiment of this application, a current combination capable of increasing the heat generated by the three-phase stator winding and the heat generated by the rotor winding may be selected from the current combinations that satisfy the fourth preset condition, and a harmonic is separately injected into the current combination.

In an embodiment, the second control signal and the fourth control signal are PWM signals. A duty cycle of the fourth control signal is greater than that of the second control signal. That is, the controller 2014 injects the harmonic into the current of the three-phase stator winding by increasing a duty cycle of the inverter control sub-signal for the inverter circuit 2011, and injects the harmonic into the current of the rotor winding by increasing a duty cycle of the voltage transformation control sub-signal for the direct current converter circuit 2012.

In an embodiment, when a temperature of the three-phase stator winding is greater than a preset stator temperature or a temperature of the rotor winding is greater than a preset rotor temperature, the controller 2014 reduces the output current of the inverter circuit 2011 and the output current of the direct current converter circuit 2012.

During specific implementation, the controller 2014 monitors the temperature of the three-phase stator winding in real time by using a first temperature sensor. The first temperature sensor may be disposed on a surface of the three-phase stator winding. The controller 2014 compares the detected temperature of the three-phase stator winding with the preset stator temperature. The preset stator temperature may be understood as a safe temperature of the three-phase stator winding. If the temperature of the three-phase stator winding is greater than the preset stator temperature, the controller 2014 selects, from the plurality of current combinations that satisfy Formula 15, a current combination that enables the drive motor to generate a small amount of heat. For example, the controller 2014 reduces the output current of the inverter circuit 2011 by reducing the duty cycle of the inverter control sub-signal of the second control signal, so that the temperature of the three-phase stator winding falls within a safe temperature range. In addition, to ensure that the output current of the inverter circuit 2011 and the output current of the direct current converter circuit 2012 satisfy the second preset condition, the controller 2014 also reduces the output current of the direct current converter circuit 2012 by reducing the duty cycle of the voltage transformation control sub-signal of the second control signal. In this case, the torque of the drive motor is still zero.

Similarly, the controller 2014 monitors the temperature of the rotor winding in real time by using a second temperature sensor. The second temperature sensor may be disposed on a surface of the rotor winding. The controller 2014 compares the detected temperature of the rotor winding with the preset rotor temperature. The preset rotor temperature may be understood as a safe temperature of the rotor winding. The preset rotor temperature and the preset stator temperature may be the same temperature. If the temperature of the rotor winding is greater than the preset rotor temperature, the controller 2014 selects, from the plurality of current combinations that satisfy Formula 15, a current combination that enables the drive motor to generate a small amount of heat. For example, the controller 2014 reduces the output current of the direct current converter circuit 2012 by reducing the duty cycle of the voltage transformation control sub-signal of the second control signal. In addition, to ensure that the output current of the inverter circuit 2011 and the output current of the direct current converter circuit 2012 satisfy the second preset condition, the controller 2014 also reduces the output current of the inverter circuit 2011 by reducing the duty cycle of the inverter control sub-signal of the second control signal. In this case, the torque of the drive motor is still zero.

According to this embodiment of this application, damage caused by excessively high temperatures of the three-phase stator winding and the rotor winding may be avoided, and high security and reliability are ensured.

In an embodiment, when the temperature of the three-phase stator winding is greater than the preset stator temperature or the temperature of the rotor winding is greater than the preset rotor temperature, the controller 2014 controls the output currents of the inverter circuit 2011 and the direct current converter circuit 2012 to switch from satisfying the fourth preset condition to satisfying the second preset condition. In this case, the controller 2014 controls the output currents of the inverter circuit 2011 and the direct current converter circuit 2012 to switch from a mode in which the harmonic is injected to a mode in which no harmonic is injected. This may reduce the copper loss and the iron loss of the three-phase stator winding, thereby reducing the heat generated by the drive motor.

In an embodiment, frequencies of an alternating current component of the third current and an alternating current component of the fourth current are different. That is, frequencies of the alternating current component of the current of the three-phase stator winding and the alternating current component of the current of the rotor winding are different. That is, in Formula 13, a value of $\omega_1$ is different from that of $\omega_2$. According to this embodiment of this application, mutual coupling of the alternating current component of the current of the three-phase stator winding and the alternating current component of the current of the rotor winding may be avoided, thereby avoiding the drive motor generating torque.

In an embodiment, after the controller 2014 determines the output current of the direct current converter circuit 2012, that is, after the current of the rotor winding is determined, based on Ohm's law, the controller 2014 may determine a voltage amplitude of the rotor winding based on the current of the rotor winding, and determine the duty cycle of the control signal for the direct current converter circuit 2012 based on the voltage amplitude of the rotor winding.

It may be understood that the foregoing describes, with reference to FIG. 6 to FIG. 10, how the drive motor generates heat. The following describes, with reference to FIG. 11, an example of heating the power battery 202 by using the heat generated by the drive motor. As shown in FIG. 11, the following steps are performed.

S 1101: The pump apparatus 203 drives the motor coolant to enter the three-phase stator winding and the rotor winding.

The motor coolant in the cooling loop is driven by the pump apparatus 203 to flow. In an embodiment, the controller 2014 may further control an operating status of the pump apparatus 203, for example, may control output power, start, or stop of the pump apparatus 203. It may be understood that the pump apparatus 203 may alternatively be controlled by another controller such as a vehicle control unit. For example, when the controller 2014 detects that the temperature of the power battery 202 is less than the preset battery temperature, the controller 2014 starts the pump apparatus 203.

S 1102: The motor coolant heats the battery coolant in the cooling loop.

It may be understood that in this application, liquid flowing into the drive motor is referred to as the motor coolant, and liquid flowing into a cooling channel of the power battery is referred to as the battery coolant. In practice, both the motor coolant and the battery coolant are cooling media flowing in the cooling loop, and may specifically implement oil cooling. In this case, the motor coolant flowing into the three-phase stator winding and the rotor winding returns to the cooling loop, and performs heat transfer with the battery coolant. That is, the heat generated by the three-phase stator winding and the rotor winding is transferred to the battery coolant.

S 1103: The pump apparatus 203 drives the battery coolant to enter the cooling channel of the power battery 202, to heat the power battery 202.

It may be understood that the cooling channel is disposed around the power battery 202. The battery coolant is not directly in contact with the power battery.

S 1104: The controller 2014 detects whether the temperature of the power battery 202 is less than the preset battery temperature.

When detecting that the temperature of the power battery 202 is less than the preset battery temperature, the controller 2014 performs steps S601b and S901b described above.

S1105: Start the drive motor normally.

It should be explained that the controller 2014 normally starts the drive motor by executing an existing control manner for a drive motor. To be specific, the torque of the drive motor is not zero, the torque is as large as possible. The amount of the heat generated by the drive motor 2013 is as small as possible.

It should be noted that the terms "first" and "second" are merely intended for a purpose of description, and shall not be understood as an indication or implication of relative importance.

The foregoing descriptions are merely specific implementations of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

**Claims**

1. A controller for a drive motor, wherein the drive motor performs heat exchange with a power battery through a cooling loop, the drive motor comprises a three-phase stator winding, the power battery supplies power to the three-phase stator winding through an inverter circuit, and the controller is configured to:

    in response to that a temperature of the power battery is greater than or equal to a preset battery temperature, control an output current of the inverter circuit, so that the drive motor outputs torque to drive a wheel; or
    in response to that a temperature of the power battery is less than a preset battery temperature, adjust an output current of the inverter circuit based on a result of comparison between a voltage of the power battery and a preset battery voltage, to control the output current of the inverter circuit to increase heat generated by the three-phase stator winding of the drive motor.

2. The controller according to claim 1, wherein the controller is configured to:
   in response to that the temperature of the power battery is less than the preset battery temperature, output a first control signal to control the output current of the inverter circuit, so that the output torque of the drive motor is zero.

3. The controller according to claims 1 and 2, wherein the controller is configured to:
   in response to that the temperature of the power battery is less than the preset battery temperature, control the output current of the inverter circuit to satisfy a first preset condition.

4. The controller according to any one of claims 1 to 3, wherein the controller is configured to:

    in response to that the voltage of the power battery is less than or equal to the preset battery voltage, output the first control signal to control the output current of the inverter circuit; or
    in response to that the voltage of the power battery is greater than the preset battery voltage, output a third control signal to control the output current of the inverter circuit.

5. The controller according to any one of claims 1 to 4, wherein the controller is configured to:

    in response to that the voltage of the power battery is less than or equal to the preset battery voltage, control the output current of the inverter circuit to satisfy the first preset condition; or
    in response to that the voltage of the power battery is greater than the preset battery voltage, control the output current of the inverter circuit to satisfy a third preset condition.

6. The controller according to claim 1, wherein the drive motor further comprises a rotor winding, the power battery supplies power to the rotor winding through a direct current converter circuit, and the controller is configured to:
   in response to that the temperature of the power battery is less than the preset battery temperature, output a second control signal to control the output currents of the inverter circuit and the direct current converter circuit, so that the output torque of the drive motor is zero.

7. The controller according to claim 1, wherein the drive motor further comprises a rotor winding, the power battery supplies power to the rotor winding through a direct current converter circuit, and the controller is configured to:
   in response to that the temperature of the power battery is less than the preset battery temperature, control the output current of the inverter circuit and an output current of the direct current converter circuit to satisfy a second preset condition.

8. The controller according to claim 6 or 7, wherein the controller is configured to:

   in response to that the voltage of the power battery is less than or equal to the preset battery voltage, output the second control signal to control the output currents of the inverter circuit and the direct current converter circuit; or
   in response to that the voltage of the power battery is greater than the preset battery voltage, output a fourth control signal to control the output currents of the inverter circuit and the direct current converter circuit.

9. The controller according to claim 6 or 7, wherein the controller is configured to:

   in response to that the voltage of the power battery is less than or equal to the preset battery voltage, control the output current of the inverter circuit and the output current of the direct current converter circuit to satisfy the second preset condition; or
   in response to that the voltage of the power battery is greater than the preset battery voltage, control the output current of the inverter circuit and the output current of the direct current converter circuit to satisfy a fourth preset condition.

10. The controller according to any one of claims 1 to 9, wherein the controller is further configured to:
    in response to that a temperature of the three-phase stator winding is greater than a preset stator temperature or a temperature of the rotor winding is greater than a preset rotor temperature, control the output current of the inverter circuit to switch from satisfying the third preset condition to satisfying the first preset condition or from satisfying the fourth preset condition to satisfying the second preset condition.

11. A motor control unit, wherein the motor control unit comprises a controller and an inverter circuit, the controller is configured to control an output current of the inverter circuit, an output end of the inverter circuit is connected to a three-phase stator winding of a drive motor, and an input end of the inverter circuit is connected to a power battery; and

    in response to that a temperature of the power battery is greater than or equal to a preset battery temperature, the inverter circuit outputs a current that satisfies a fifth preset condition, so that the drive motor outputs torque to drive a wheel; or
    in response to that a temperature of the power battery is less than a preset battery temperature, the inverter circuit outputs a current that satisfies a sixth preset condition, to increase heat generated by the three-phase stator winding of the drive motor, and adjusts the output current based on a result of comparison between a voltage of the power battery and a preset battery voltage, to change the heat generated by the three-phase stator winding of the drive motor.

12. The motor control unit according to claim 11, wherein in response to that the temperature of the power battery is less than the preset battery temperature, the inverter circuit outputs the current that satisfies the sixth preset condition, so that the output torque of the drive motor is zero.

13. The motor control unit according to claim 11 or 12, wherein the motor control unit further comprises a direct current converter circuit, an output end of the direct current converter circuit is connected to a rotor winding of the drive motor, and an input end of the direct current converter circuit is connected to the power battery;

    the sixth preset condition comprises a first preset condition, a second preset condition, a third preset condition, and a fourth preset condition;
    when the inverter circuit outputs a current that satisfies the first preset condition or the third preset condition, a direct current component and an alternating current component of a quadrature-axis current of the three-phase stator winding are zero;
    when the inverter circuit and the direct current converter circuit output currents that satisfy the third preset condition or the fourth preset condition, the alternating current component of the quadrature-axis current of the three-phase stator winding is not zero; and
    when the inverter circuit and the direct current converter circuit output currents that satisfy the second preset condition or the fourth preset condition, a direct-axis current of the three-phase stator winding is in a preset proportion to a current of the rotor winding.

14. An electric drive system, wherein the electric drive system comprises an inverter circuit, a direct current converter circuit, a drive motor, and the controller according to any one of claims 1 to 10.

15. An electric vehicle, wherein the electric vehicle comprises a power battery and the electric drive system according to claim 14, and the power battery is configured to supply power to the electric drive system.

FIG. 1

Electric vehicle 20

Cooling loop

Electric drive system 201

Power battery 202

FIG. 2

FIG. 3

FIG. 4

FIG. 5

S600:
Detect whether a
temperature of a power battery is
less than a preset battery
temperature

No

Yes

S601b: Adjust an output current of an
inverter circuit based on a result of
comparison between a voltage of the
power battery and a preset battery voltage

S601a: Start a drive
motor normally

FIG. 6

q

V

d

θ

U

W

FIG. 7

```
                    ┌─────────────────────┐
                   ╱  S601b1:              ╲
                  ╱   Detect whether a      ╲          Yes
                 ╱  voltage of a power       ╲─────────────────────┐
                 ╲  battery is greater       ╱                      │
                  ╲  than a preset battery  ╱                       │
                   ╲  voltage              ╱                        │
                    └─────────┬───────────┘                        │
                              │ No                                 │
                              ▼                                    ▼
           ┌────────────────────────────────┐      ┌────────────────────────────────┐
           │  S602a: Output a first control  │      │  S602b: Output a third control  │
           │  signal to an inverter circuit  │      │  signal to an inverter circuit  │
           └────────────────────────────────┘      └────────────────────────────────┘
```

FIG. 8

```
                    ┌─────────────────────┐
                   ╱  S900:                ╲
                  ╱   Detect whether a      ╲          No
                 ╱  temperature of a power   ╲─────────────────────┐
                 ╲  battery is less than a   ╱                      │
                  ╲  preset battery          ╱                      │
                   ╲  temperature           ╱                       │
                    └─────────┬───────────┘                         │
                              │ Yes                                 │
                              ▼                                     ▼
     ┌──────────────────────────────────────┐      ┌────────────────────────────────┐
     │  S901b: Adjust output currents of an  │      │  S901a: Start a drive motor     │
     │  inverter circuit and a direct current │     │  normally                       │
     │  converter circuit based on a result of│     └────────────────────────────────┘
     │  comparison between a voltage of the   │
     │  power battery and a preset battery    │
     │  voltage                               │
     └──────────────────────────────────────┘
```

FIG. 9

S901b1:
Detect whether a
voltage of a power battery is greater
than a preset battery
voltage

Yes

No

S902a: Output a second control
signal to an inverter circuit and a
direct current converter circuit

S902b: Output a fourth control
signal to an inverter circuit and a
direct current converter circuit

FIG. 10

S1101: A pump apparatus drives a motor coolant to enter a three-
phase stator winding and a rotor winding

S1102: The motor coolant heats a battery coolant in a cooling loop

S1103: The pump apparatus drives the battery coolant to enter a
cooling channel of a power battery, to heat the power battery

S1104:
A controller detects
whether a temperature of the power battery is less
than a preset battery
temperature

Yes

No

S1105: Start a drive motor normally

FIG. 11

Europäisches
Patentamt

European
Patent Office

Office européen
des brevets

# EUROPEAN SEARCH REPORT

Application Number

EP 23 18 7998

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/080858 A1 (LIAN YUBO [CN] ET AL) 17 March 2022 (2022-03-17) <br> * paragraph [0010] * <br> * paragraph [0082] * <br> * paragraph [0118] * <br> * paragraph [0097] * <br> * paragraph [0079]; figure 4 * <br> * paragraph [0087] * <br> * paragraph [0004] * <br> * paragraph [0009] * <br> * paragraph [0075] * | 1-15 | INV. <br> B60L58/25 <br> B60L15/02 |
| A | US 2004/165868 A1 (SATO EIJI [JP] ET AL) 26 August 2004 (2004-08-26) <br> * paragraph [0011] * | 1 | |
| A | US 2019/009691 A1 (KUTTENKULER JASON DANIEL [US] ET AL) 10 January 2019 (2019-01-10) <br> * paragraphs [0021] - [0022] * | 1 | |
| | | | TECHNICAL FIELDS SEARCHED (IPC) <br><br> B60L |

The present search report has been drawn up for all claims

| Place of search | Date of completion of the search | Examiner |
|---|---|---|
| The Hague | 21 December 2023 | Herrera Caballero, A |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

....................................................................

& : member of the same patent family, corresponding
document

EPO FORM 1503 03.82 (P04C01)

## EP 4 321 375 A1

### ANNEX TO THE EUROPEAN SEARCH REPORT
### ON EUROPEAN PATENT APPLICATION NO.

EP 23 18 7998

This annex lists the patent family members relating to the patent documents cited in the above-mentioned European search report.
The members are as contained in the European Patent Office EDP file on
The European Patent Office is in no way liable for these particulars which are merely given for the purpose of information.

21-12-2023

| Patent document cited in search report | | Publication date | Patent family member(s) | | Publication date |
|---|---|---|---|---|---|
| US 2022080858 | A1 | 17-03-2022 | CN | 111347935 A | 30-06-2020 |
| | | | EP | 3895933 A1 | 20-10-2021 |
| | | | JP | 2022514706 A | 14-02-2022 |
| | | | US | 2022080858 A1 | 17-03-2022 |
| | | | WO | 2020125769 A1 | 25-06-2020 |
| US 2004165868 | A1 | 26-08-2004 | CN | 1537355 A | 13-10-2004 |
| | | | EP | 1414145 A1 | 28-04-2004 |
| | | | JP | 3797361 B2 | 19-07-2006 |
| | | | JP | WO2003015254 A1 | 02-12-2004 |
| | | | KR | 20040019372 A | 05-03-2004 |
| | | | KR | 20070055584 A | 30-05-2007 |
| | | | US | 2004165868 A1 | 26-08-2004 |
| | | | WO | 03015254 A1 | 20-02-2003 |
| US 2019009691 | A1 | 10-01-2019 | US | 2019009691 A1 | 10-01-2019 |
| | | | WO | 2016065119 A1 | 28-04-2016 |

EPO FORM P0459

For more details about this annex : see Official Journal of the European Patent Office, No. 12/82